(19) Europäisches Patentamt
European Patent Office
Office européen des brevets

(11) **EP 1 221 781 B1**

(12) **EUROPÄISCHE PATENTSCHRIFT**

(45) Veröffentlichungstag und Bekanntmachung des Hinweises auf die Patenterteilung:
**11.04.2007  Patentblatt 2007/15**

(51) Int Cl.:
*H04L 7/027* (2006.01)    *H04L 25/24* (2006.01)

(21) Anmeldenummer: **01440423.0**

(22) Anmeldetag: **19.12.2001**

(54) **Taktrückgewinnung**

Clock recovery

Récupération d'horloge

(84) Benannte Vertragsstaaten:
**AT BE CH CY DE DK ES FI FR GB GR IE IT LI LU MC NL PT SE TR**

(30) Priorität: **08.01.2001  DE 10100500**

(43) Veröffentlichungstag der Anmeldung:
**10.07.2002  Patentblatt 2002/28**

(73) Patentinhaber: **Alcatel Lucent**
**75008 Paris (FR)**

(72) Erfinder:
• **Schabel, Stefan**
 **89168 Niederstotzingen (DE)**
• **Lautenschläger, Wolfram, Dr.**
 **74343 Sachsenheim (DE)**

(74) Vertreter: **Schmidt, Werner Karl et al**
**Alcatel Lucent**
**Intellectual Property & Standards**
**70430 Stuttgart (DE)**

(56) Entgegenhaltungen:
US-A- 3 999 135    US-A- 4 339 824
US-A- 5 276 712    US-A- 6 075 825

• TJHUNG T T ET AL: "OPTIMUM BANDPASS FILTER DESIGN FOR TIMING EXTRACTION IN DIGITAL REPEATERS" COMPUTERS AND COMMUNICATIONS TECHNOLOGY TOWARD 2000. SEOUL, AUG. 25 - 28, 1987, PROCEEDINGS OF THE REGION 10 CONFERENCE. (TENCON), NEW YORK, IEEE, US, Bd. VOL. 2 CONF. 3, 1987, Seiten 393-397, XP000808811

**Beschreibung**

Die Erfindung bezieht sich auf ein Verfahren zur digitalen Nachrichtenübertragung, bei welchem die übertragenen Signale am Ende einer Übertragungsstrecke mittels einer Einrichtung zur Taktrückgewinnung abgetastet und anschließend weiterverarbeitet werden und bei welchem die Signale einem Entscheider gleichzeitig über zwei getrennte Pfade, einen Verzögerungspfad und einen mit einem Filter ausgerüsteten Pfad, zugeführt werden (DE-Buch "Digitale und analoge Nachrichtenübertragung" von Erich Pehl, Verlag Hüthig, Heidelberg, 1998, Seiten 182, 183).

Bei der leitungsgebundenen sequentiellen Übertragung von digitalen Signalen muß der Empfängertakt - der lokale Takt - in Frequenz und Phase auf den Takt der ankommenden Signale eingeregelt werden. Das ist erforderlich, weil sich durch Variation der Übertragungsfunktion des Übertragungskanals nicht nur die Form der empfangenen Signale (Impulse) ändert, sondern weil sich auch die zeitliche Lage des jeweiligen Impulsmaximums verschiebt. Die gesamte Impulsformung wird außerdem durch Temperaturdrift und Toleranzen der in Sender und Empfänger eingesetzten Bauteile bzw. des als Übertragungsmedium eingesetzten Kabels beeinflußt. Sie ist somit zeitabhängig und einer gewissen Streuung unterworfen. Das Verhältnis von Nutzsignal zu Störsignal (Störabstand) und damit die erreichbare Bitfehlerhäufigkeit hängt wesentlich von den geschilderten Einflußgrößen ab. In allen Fällen muß sichergestellt sein, daß beim Abtasten der beim Empfänger ankommenden Signale noch eine weiterverarbeitende Größe gewonnen wird, die eine vorgegebene Grenze nicht überschreitende Bitfehlerhäufigkeit garantiert.

Entsprechend dem eingangs erwähnten DE-Buch von Erich Pehl kann der Takt beispielsweise aus einem kontinuierlichen Datensignal durch Einsatz eines schmalbandigen Filters zurückgewonnen werden. Bei einem anderen dieser Verfahren wird ein phasengeregelter Oszillator (PLL-Schaltung) eingesetzt. In paketvermittelten Netzen (Burstbetrieb) bei welchen die Daten zu Bursts komprimiert sind, liegen zwischen den Bursts datenfreie Pausen und die Bursts können von unterschiedlichen Sendern kommen. Sie können daher auch völlig unterschiedliche Phasenlagen haben. Die erwähnten Verfahren sind für die Taktrückgewinnung in Netzen mit Burstbetrieb zu langsam und daher nicht geeignet.

Das Dokument US-A-5 276 712 offenbart ein Verfahren zur Nachrichtenübertragung im Kontinuums-Betrieb, wobei die Taktrückgewinnung ausgelegt ist, um eine gewisse maximale Zeit ohne Eingangspulse zu überbrücken, ohne Verlust des rückgewonnenen Taktsignals. Die Rückgewinnung des Taktsignals wird mittels eines Resonators mit einem genügend hohen Qualitätsfaktor realisiert, der von einem begrenzenden Verstärker gefolgt wird.

Der Erfindung liegt die Aufgabe zugrunde, das eingangs geschilderte Verfahren so weiterzubilden, daß es auch bei einer digitalen Nachrichtenübertragung mit Burstbetrieb eingesetzt werden kann.

Diese Aufgabe wird gemäß der Erfindung dadurch gelöst,

- daß als Filter ein breitbandiger Bandpaß mit einer relativen Bandbreite von 0,2 % bis 0,4 % des Bittaktes der übertragenen Signale eingesetzt wird, dessen Einschwingzeit kleiner als die Zeit ist, um welche die Signale auf dem Verzögerungspfad verzögert werden, die ihrerseits kleiner als die Ausschwingzeit des Bandpasses ist, und
- daß dem Bandpaß ein die Amplitude der Ausgangsspannung desselben begrenzender Verstärker nachgeschaltet wird, durch welchen die Taktsignale auf den erforderlichen, konstanten Pegel gebracht werden.

Das ankommende Signal wird bei diesem Verfahren wie bisher in zwei getrennte Pfade aufgespalten. In einem Pfad liegt der breitbandige Bandpaß, der die Taktschwingung aus dem Signalgemisch ausfiltert. Das gefilterte Taktsignal wird anschließend durch den begrenzenden Verstärker aufbereitet. Die Einschwingzeit des Bandpasses ist am Burstanfang kleiner als seine Ausschwingzeit bzw. Haltezeit nach Burstende. Auf dem Verzögerungspfad werden die Signale um eine konstante Zeit verzögert, die größer als die Einschwingzeit des Bandpasses aber kleiner als dessen Ausschwingzeit ist. Am Entscheider steht unter diesen Bedingungen während der gesamten Burstdauer ein phasenrichtiges Taktsignal mit einwandfrei auswertbarem Pegel zur Verfügung.

In bevorzugter Ausführungsform wird als breitbandiger Bandpaß ein taktsynchroner Bandpaß eingesetzt. Das zu filternde Signal wird in zwei Analogmultiplizierern einerseits mit dem lokalen Takt und andererseits mit dem um 90° verschobenen lokalen Takt multipliziert. Am Ausgang der Multiplizierer stehen Real- und Imaginärteil der komplexen

Einhüllenden des Signals als zwei niederfrequente Signale zur Verfügung. Die beiden Hüllkurvensignale werden durch zwei identische Tiefpässe bandbegrenzt. An deren Ausgängen wird die nunmehr bandbegrenzte Hüllkurve erneut mit dem lokalen Takt bzw. dem um 90° verschobenen lokalen Takt multipliziert und zu einem Ausgangssignal addiert.

Das Verfahren nach der Erfindung wird anhand der Zeichnungen als Ausführungsbeispiel beschrieben.

Es zeigen:

Fig. 1 in schematischer Darstellung eine zu einem Empfänger bei der digitalen Nachrichtenübertragung gehörenden Schaltung.
Fig. 2 eine gegenüber Fig. 1 ergänzte Ausführungsform.
Fig. 3 eine Einzelheit der Schaltung nach Fig. 1 oder 2 in vergrößerter Darstellung.

Am Eingang E eines Empfängers für Signale der digitalen Nachrichtenübertragung steht ein aus Bursts bestehender Signalstrom S an. Der Signalstrom S wird am Eingang E auf einen Pfad a und einen durch zwei Schleifen gekennzeichneten Verzögerungspfad b aufgeteilt. Im Pfad a sind ein breitbandiger Bandpaß 1 und ein begrenzender Verstärker 2 angeordnet. Der Verzögerungspfad b und der Ausgang des Verstärkers 2 sind mit einem Entscheider 3 verbunden, an dessen Ausgang der regenerierte Signalstrom S zur Verfügung steht.

Die Bandbreite des Bandpasses 1 wird in Abhängigkeit vom Bittakt des zu empfangenden Signalstrom ausgewählt. Ein Maß dafür ist die Filtergüte Q, die zwischen 300 und 400 liegen soll. Das entspricht einer relativen Bandbreite von etwa 0,3 % des Bittaktes. Sie beträgt also bei einem Signalstrom mit einem Bittakt von 10 Gbit/s etwa 30 MHz. In diesem Sinne wird die Bandbreite des Bandpasses 1 so ausgewählt, daß sie zwischen 0,2 % und 0,4 % des Bittaktes des zum empfangenden Signalstroms liegt.

Sobald ein Burst des Signalstroms S am Bandpaß 1 ansteht, beginnt derselbe zu arbeiten. Er hat am Burstanfang eine Einschwingzeit TE, nach welcher vom Bandpaß 1 ein verwertbares Taktsignal geliefert wird. Das auf dem Verzögerungspfad b geführte Signal (Burst) wird um eine gegenüber der Einschwingzeit TE längere Zeit TV verzögert. Am Burstende hat der Bandpaß 1 eine Ausschwingzeit TA. Danach wird kein Taktsignal mehr geliefert. Erst beim Eintreffen des nächsten Bursts des Signalstroms S liefert der Bandpaß 1 - so wie beschrieben - wieder ein Taktsignal. Da das Signal auf dem Verzögerungspfad b um die Zeit TV verzögert wird, muß die Ausschwingzeit TA des Bandpasses 1 größer als die Zeit TV sein.

Um die angegebenen Zeiten im geschilderten Sinne - TE < TV < TA - realisieren zu können und um Auswirkungen von Amplitudenschwankungen der Spannung am Ausgang des Bandpasses 1 zu vermeiden, ist an denselben der begrenzende Verstärker 2 angeschlossen. Durch den Verstärker 2 wird das gefilterte, vom Bandpaß gelieferte Taktsignal aufbereitet. Sein Schwellenwert wird in bevorzugter Ausführungsform so gewählt, daß die Begrenzung des Taktsignals bei weniger als ¼ der Maximalamplitude am Ausgang des Bandpasses 1 einsetzt. Die Einschwingzeit TE des Bandpasses 1 wird dadurch wesentlich kürzer als dessen Ausschwingzeit TA eingestellt. Der Verstärker 2 hebt andererseits den Pegel des Taktsignals auf einen für die Weiterverarbeitung brauchbaren Wert an. Das Taktsignal wird vom Verstärker 2 dem Entscheider 3 aufgegeben, an dem wegen der Bedingung TE < TV < TA während der gesamten Länge des Bursts ein phasenrichtiges Taktsignal zur Verfügung steht.

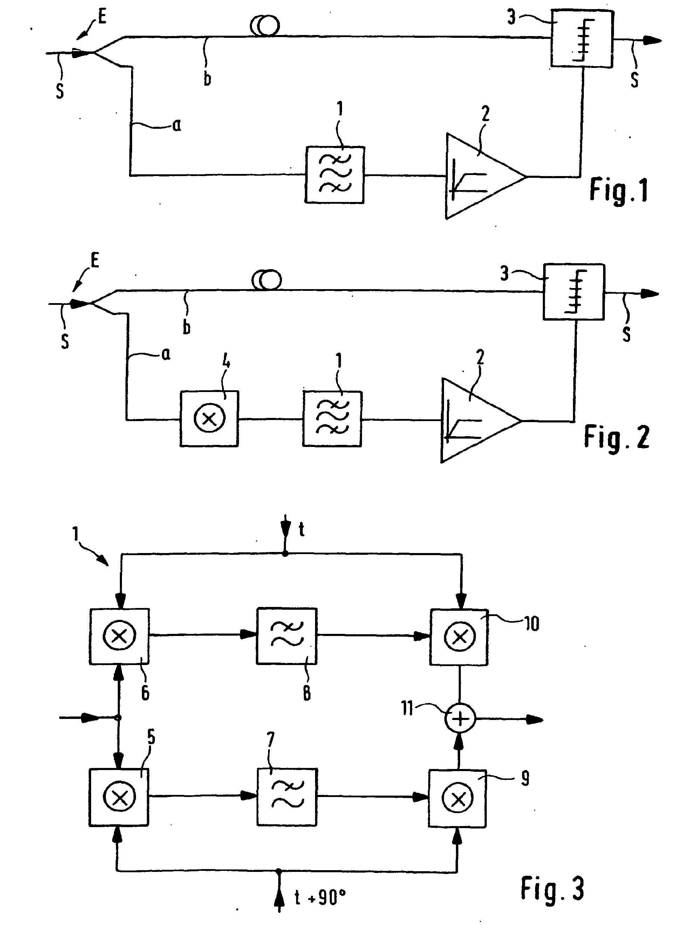

Falls der empfangene Signalstrom beispielsweise mit einem NRZ-Code (Non Return to Zero) codiert ist, wird vor dem Bandpaß 1 ein Wandler 4 (Fig. 2) in den Pfad a eingeschaltet, durch welchen der NRZ-Code in ein RZ-Code umgewandelt wird. Die Taktfrequenz des Signalstroms wird dadurch als spektraler Anteil im Signalstrom reproduziert.

Um zu vermeiden, daß datenflußabhängige Taktausfälle auftreten, wird weiterhin zweckmäßig sichergestellt, daß die Ausschwingzeit TA länger ist, als die maximal erlaubte bzw. zu erwartende Folge konstant 0 oder konstant 1 im Signalstrom. Das kann erreicht werden, wenn die Güte Q des Bandpasses 1 größer ist als:

$$Q = 2\pi N / \ln (U_{max} / 2U_{limit}).$$

Darin sind:

| | |
|---|---|
| N | die maximal zu erwartende Länge einer 0 oder 1 Folge |
| $U_{max}$ | der Maximalpegel am Ausgang des Bandpasses 1 bei Anliegen einer 0101 Folge |
| $U_{limit}$ | die Begrenzungsspannung für Vollaussteuerung des Verstärkers 2. |

Als Bandpaß 1 wird in bevorzugter Ausführungsform ein taktsynchroner Bandpaß eingesetzt, so wie er beispielsweise in Fig. 3 dargestellt ist:

Das zu filternde Signal wird in zwei analogen Multiplizierern 5 und 6 mit dem lokalen Takt t einerseits sowie dem um 90° verschobenen lokalen Takt t andererseits multipliziert. Am Ausgang der Multiplizierer 5 und 6 stehen Real- und Imaginärteil der komplexen Einhüllenden des Eingangssignals als zwei niederfrequente Signale zur Verfügung. Diese beiden Signale werden durch zwei identische Tiefpässe 7 und 8 bandbegrenzt. An deren Ausgängen werden die Signale in analogen Multiplizierern 9 und 10 erneut mit dem Takt t bzw. mit dem um 90° verschobenen Takt t multipliziert und in einem Summierer 11 zum Ausgangssignal addiert, das dem Verstärker 2 aufgegeben wird.

Dieser taktsynchrone Bandpaß verhält sich wie ein Bandpaß mit dem lokalen Takt t als Mittenfrequenz und einer Bandbreite gleich der Schnittfrequenz der beiden Tiefpässe 7 und 8. Obwohl das Ausgangssignal aus dem lokalen Takt t generiert wird, stimmt es in Frequenz und Phase mit dem Eingangssignal überein, wenn die Abweichung zwischen Eingangsfrequenz und lokaler Taktfrequenz innerhalb der eingestellten Bandbreite liegt.

Die Multiplizierer 5 und 6 bzw. 9 und 10 können durch schnelle Diodenmischer implementiert werden. Die Grenzfrequenz der niederfrequenten Signale fällt mit steigender Güte Q und ist mit schnellen Operationsverstärkern verarbeitbar.

Durch den zusätzlichen Einsatz von sample & hold-Gliedern kann die Bandbreite des Bandpasses 1 nach Fig. 3 verändert werden. Sie können gegebenenfalls in Übertragungsrichtung vor den Tiefpässen 7 und 8 angeordnet werden. Derartige sample & hold Glieder können eine relativ große Bandbreite am Burstanfang für schnelles Einschwingen (kurze Einschwingzeit TE) bewirken und danach durch Umschaltung auf geringe bzw. Null-Bandbreite für lange Ausschwingzeit TA sorgen. Es ergibt sich dann eine nur geringe Abhängigkeit des Taktsignals vom Signalinhalt.

**Patentansprüche**

1. Verfahren zur digitalen Nachrichtenübertragung im Burst-Betrieb, bei welchem die übertragenen Signale am Ende einer Übertragungsstrecke mittels einer Einrichtung zur Taktrückgewinnung abgetastet und anschliessend weiterverarbeitet werden und bei welchem die Signale einem Entscheider gleichzeitig über zwei getrennte Pfade, einen Verzögerungspfad und einen mit einem Filter ausgerüsteten Pfad, zugeführt werden, **dadurch gekennzeichnet,** **dass** als Filter ein breitbandiger Bandpass (1) mit einer relativen Bandbreite von 0,2 % bis 0,4 % des Bittaktes der übertragenen Signale eingesetzt wird, und **dass** dem Bandpass (1) ein die Amplitude der Ausgangsspannung desselben begrenzender Verstärker (2) nachgeschaltet wird, so dass dessen Einschwingzeit (TE) kleiner als die Zeit (TV) ist, um welche die Signale auf dem Verzögerungspfad (b) verzögert werden, die ihrerseits kleiner als die Ausschwingzeit (TA) des Bandpasses (1) ist, und die Taktsignale auf den erforderlichen, konstanten Pegel gebracht werden.

2. Verfahren nach Anspruch 1, **dadurch gekennzeichnet, dass** ein Bandpass (1) mit einer relativen Bandbreite von 0,3 % des Bittaktes der übertragenen Signale verwendet wird.

3. Verfahren nach Anspruch 1 oder 2, **dadurch gekennzeichnet,** **dass** als Bandpass (1) eine Schaltung mit zwei parallelen Pfaden verwendet wird, in denen jeweils ein identischer Tiefpass (7,8) zwischen zwei analogen Multiplizierern (5,9;6,10) angeordnet ist, und **dass** die Multiplizierer (6,10) des einen Pfades mit dem lokalen Takt (t) beaufschlagt werden, während die Multiplizierer (5,9) des anderen Pfades mit dem um 90 DEG verschobenen lokalen Takt (t) beaufschlagt werden.

4. Verfahren nach Anspruch 3, **dadurch gekennzeichnet, dass** in Übertragungsrichtung vor den Tiefpässen (7,8) jeweils ein sample & hold-Glied eingeschaltet wird.

5. Verfahren nach einem der Ansprüche 1 bis 4, **dadurch gekennzeichnet, dass** die Codierung der Signale vor dem Bandpass (1) gegebenenfalls von einem NRZ-Code in einen RZ-Code umgewandelt wird.

6. Vorrichtung zur Taktrückgewinnung digitaler Signale im Burst-Betrieb, bei welcher die übertragenen Signale am Ende einer Übertragungsstrecke einen Abtastung und Weiterverarbeitung durchlaufen und bei welcher die übertragenen Signale eingangsseitig (E) mit einem Entscheider (3) gleichzeitig über zwei getrennte Pfade, einen Verzögerungspfad (b) und einen mit einem Filter (1) ausgerüsteten Pfad (a), verbunden sind, **dadurch gekennzeichnet,** **dass** das Filter ein breitbandiger Bandpass (1) mit einer relativen Bandbreite von 0,2 % bis 0,4 % des Bittaktes der übertragenen Signale ist, und **dass** der Bandpass (1) mit einem die Amplitude der Ausgangsspannung desselben begrenzenden Verstärker (2) verbunden ist, so dass dessen Einschwingzeit (TE) kleiner als die Zeit (TV) ist, um welche die Signale auf dem Verzögerungspfad (b) verzögert werden, die ihrerseits kleiner als die Ausschwingzeit (TA) des Bandpasses (1) ist, und der Verstärker die Taktsignale auf den erforderlichen, konstanten Pegel bringt.

**Claims**

1. Method for digital message transmission in burst mode, in which method the transmitted signals are sampled at the end of a transmission link by means of a facility for clock recovery and are then further processed, and in which method the signals are fed to a discriminator simultaneously via two separate paths, a delay path and a path equipped with a filter, **characterized in that** a broadband bandpass filter (1) with a relative bandwidth of 0.2% to 0.4% of the bit clock of the transmitted signals is used as a filter, and downstream of the bandpass filter (1) is connected an amplifier (2) limiting the amplitude of the output voltage of the same, so that its transient response time (TE) is less than the time (TV) by which the signals are delayed on the delay path (b), which time in turn is less than the decay time (TA) of the bandpass filter (1), and the clock signals are brought to the required constant level.

2. Method according to claim 1, **characterized in that** a bandpass filter (1) with a relative bandwidth of 0.3% of the bit clock of the transmitted signals is used.

3. Method according to Claim 1 or 2, **characterized in that** a circuit with two parallel paths, in which each is an identical low-pass filter (7, 8) arranged between two analog multipliers (5,9;6,10), is used as the bandpass filter (1), and that
the local clock (t) is applied to the multipliers (6,10) of the one path, while the local clock shifted by 90° is applied to the multipliers (5,9) of the other path.

4. Method according to Claim 3, **characterized in that** a sample-and-hold element is inserted in each case in the direction of transmission prior to the low-pass filters (7,8).

5. Method according to one of Claims 1 to 4, **characterized in that** the coding of the signals prior to the bandpass filter (1) is converted if applicable from an NRZ code to an RZ code.

6. Device for clock recovery of digital signals in burst mode, in which the transmitted signals pass through sampling and further processing at the end of a transmission link, and in which the transmitted signals on the input side (E) are connected to a discriminator (3) simultaneously via two separate paths, a delay path (b) and a path (a) equipped with a filter (1), **characterized in that** the filter is a broadband bandpass filter (1) with a relative bandwidth of 0.2% to 0.4% of the bit clock of the transmitted signals, and that the bandpass filter (1) is connected to an amplifier (2) limiting the amplitude of the output voltage of the same, so that its transient response time (TE) is less than the time (TV) by which the signals are delayed on the delay path (b), which time in turn is less than the decay time (TA) of the bandpass filter (1), and the clock signals are brought to the required constant level.

**Revendications**

1. Procédé de transmission numérique d'informations en mode rafale avec lequel les signaux transmis sont échantillonnés à la fin d'un trajet de transmission au moyen d'un dispositif de récupération d'horloge et ensuite soumis à un traitement postérieur et avec lequel les signaux sont acheminés à un décideur simultanément par le biais de deux chemins séparés, un chemin à retard et un chemin équipé d'un filtre, **caractérisé en ce que** le filtre utilisé est un filtre passe-bande (1) à large bande ayant une bande passante relative égale à 0,2 à 0,4 % du rythme binaire des signaux transmis et
qu'après le filtre passe bande (1) est branché un amplificateur (2) qui limite l'amplitude de la tension de sortie de celui-ci de sorte que son temps d'établissement (TE) soit inférieur à la durée (TV) du retard des signaux sur le chemin à retard (b), laquelle est de son côté inférieure au temps d'évanouissement (TA) du filtre passe-bande (1) et les signaux d'horloge sont amenés au niveau constant nécessaire.

2. Procédé selon la revendication 1, **caractérisé en ce que** le filtre passe-bande (1) utilisé possède une bande passante relative égale à 0,3 % du rythme binaire des signaux transmis.

3. Procédé selon la revendication 1 ou 2, **caractérisé en ce que** le filtre passe-bande (1) utilisé est un circuit comprenant deux chemins dans lesquels est à chaque fois disposé un filtre passe-bas (7, 8) identique entre deux multiplicateurs analogiques (5, 9 ; 6, 10) et que les multiplicateurs (6, 10) d'un chemin sont sollicités par l'horloge locale (t) alors que les multiplicateurs (5, 9) de l'autre chemin sont sollicités par l'horloge locale (t) déphasée de 90 DEGRÉS.

4. Procédé selon la revendication 3, **caractérisé en ce qu'**un échantillonneur-bloquer est à chaque fois incorporé avant les filtres passe-bas (7, 8) dans le sens de la transmission.

5. Procédé selon l'une des revendications 1 à 4, **caractérisé en ce que** le codage des signaux avant le filtre passe-bande (1) est éventuellement converti d'un code NRZ en un code RZ.

6. Dispositif de récupération de l'horloge de signaux numériques en mode rafale avec lequel les signaux transmis sont échantillonnés puis soumis à un traitement postérieur à la fin d'un trajet de transmission et avec lequel les signaux transmis sont reliés du côté de l'entrée (E) avec un décideur (3) simultanément par le biais de deux chemins séparés, un chemin à retard (b) et un chemin (a) équipé d'un filtre (1), **caractérisé en ce que** le filtre utilisé est un filtre passe-bande (1) à large bande ayant une bande passante relative égale à 0,2 à 0,4 % du rythme binaire des signaux transmis et
que le filtre passe bande (1) est raccordé à un amplificateur (2) qui limite l'amplitude de la tension de sortie de celui-ci de sorte que son temps d'établissement (TE) soit inférieur à la durée (TV) du retard des signaux sur le chemin à retard (b), laquelle est de son côté inférieure au temps d'évanouissement (TA) du filtre passe-bande (1) et l'amplificateur amène les signaux d'horloge au niveau constant nécessaire.

Fig.1

Fig.2

Fig.3